# EUROPEAN PATENT APPLICATION

(11) **EP 2 827 030 A2**
(43) Date of publication of application: **21.01.2015**
(21) Application number: 14176679.0
(22) Date of filing: 11.07.2014
(51) Int. Cl.: F16J 15/32

(54) **A leaf seal**

(30) Priority: 17.07.2013 GB 201312766
(71) Applicant: Rolls-Royce plc, London SW1E 6AT (GB)
(72) Inventor: Pekris, Michael, Derby, DE23 6PP (GB)
(74) Representative: Hartley, Andrew Colin

(57) **Abstract**

There is disclosed a leaf seal (131) for effecting a seal between first (134) and second (51) coaxial components arranged for relative rotation about a common axis. The seal is particularly suited for use in a gas turbine engine, and has: an annular pack (50) of stacked leaves (132) mountable to said first component (134) at root portions (140) of the leaves distal to the second component (51) and extending towards the second component (51) such that end edges(136) of the leaves (132) are proximal to the second component (51); and a plurality of seal elements (52) which cooperate to define an annulus extending around a surface (137) of the second component (51). Each seal element (52): forms a sector of the annulus; is mounted to the leaf pack (50) at the end edges (136) of a respective group of said leaves (132); and defines a respective seal surface (53) which is presented for interaction with said surface (137) of the second component (51) during relative rotation between the components. The seal surfaces (53) cooperating such that, in use, a pressure drop is maintained axially across the leaf seal (131).

## Description

The present invention relates to a leaf seal, and more particularly relates to a leaf seal for effecting a seal between first and second coaxial components arranged for relative rotation about a common axis.

Leaf seals may be used to form a seal between two relatively rotating components in order to maintain a relatively high pressure on one side of the seal and a relatively low pressure on the other. A leaf seal is arranged with a large number of typically rectangular leaves which are held at a defined angle (the "lay angle") to the radial all the way round the seal circumference. The leaves give the seal a low stiffness, and the leaves are packed together such that the total leakage through the seal is reduced. Nonetheless, interleaf gaps do provide the seal with a porous aerodynamic working section. Such seals may be used, for example, in gas turbine engines.

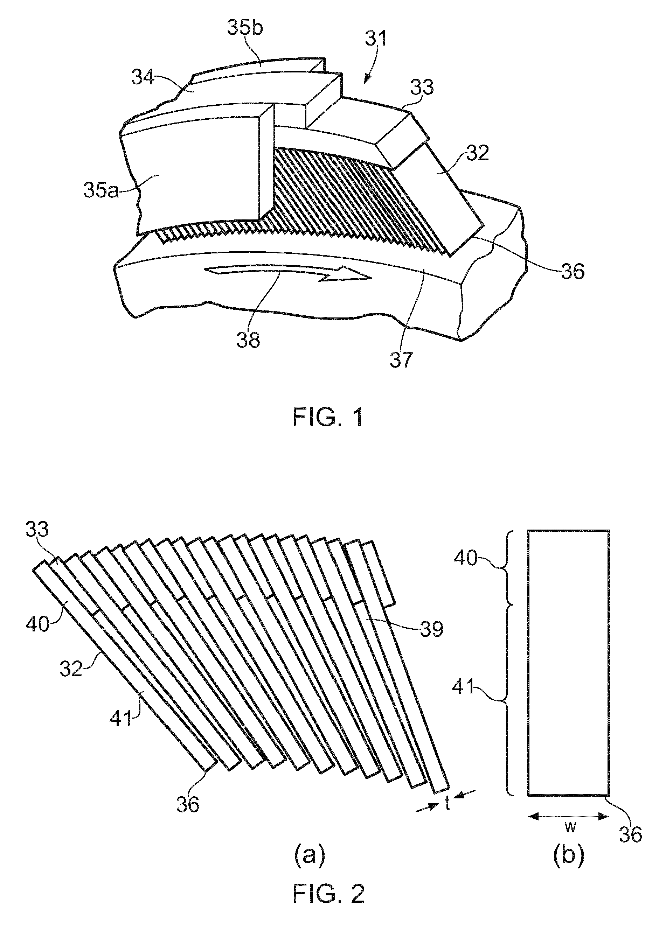

Figure 1 shows schematically a cut-away perspective view of a portion of a conventional leaf seal 31 comprising a pack of leaves 32. Figure 2 shows (a) a view along the axial direction of an arc segment of the pack to better show some of the leaves 32 edge-on, and (b) a plan view of a single leaf 32.

The leaves 32 each have a root portion 40 and a working portion 41, and have a width w in the axial direction and a thickness t. The leaves alternate with spacer elements 33 at their root portions 40, and are secured thereat to a backing ring 34 of a housing, which typically also comprises front 35a (high pressure side) and rear (low pressure side) 35b rigid cover plates. The working portions 41 of the leaves 32 present end edges 36 towards a surface 37 of a rotating component (shaft) generally rotating in the direction depicted by arrowhead 38. The leaves 32, and in particular the end edges 36 of the leaves 32, act against the surface 37 in order to create a seal across the assembly 31. Each leaf 32 is sufficiently compliant in order to adjust with rotation of the surface 37, so that a good sealing effect is created. The spacers 33 ensure that flexibility is available to appropriately present the leaves 32 towards the surface 37 which, as illustrated, is generally with an inclined angle between them. The spacers 33 also help to form interleaf gaps 39 between adjacent working portions 41 of the leaves 32. A leakage flow through these gaps 39 is induced by the pressure differential across the seal.

Previously proposed leaf seals of an air-riding configuration are designed such that the end edges 36 of the leaves adjacent the rotating component are presented with a small air gap therebetween such that the leaves ride on the air leakage through that gap to inhibit premature contact wear of the leaf seal elements against the surface of the rotating component. It will be understood that the air gap should be as narrow as possible such that air leakage is reduced to the minimal level possible whilst creating the air-riding effect, so as to limit actual leakage across the seal. However, it has been found that it can be difficult to generate sufficient hydrodynamic lift between the leaf pack and the rotating component to provide a satisfactory air-riding cushion between the two, and so leaf seals in their conventional form provide limited potential for the generation of hydrodynamic lift. Conventional leaf seals are thus prone to wear at the tips of the leaves and/or on the surface of the rotating component itself. This limits the useful life of the leaf seal.

Wear and frictional heat generation are known problems associated with conventional contacting leaf-type shaft seals in both gas and steam turbines, and can result in adverse consequences for part life and engine efficiency. The conventional leaf seal may also be exposed to such conditions in engine operation, . Aero-elastic vibrations of the leaves under a pressure loading may also cause leaf damage. Further, excessive deflection and distortion of the leaf pack in operation can also lead to damage, or can give rise to high torques (due to "blow-down" of the leaves against the rotating shaft surface) and heavy wear

It is a preferred object of the present invention to provide an improved leaf seal.

According to the present invention, there is provided a leaf seal for effecting a seal between first and second coaxial components arranged for relative rotation about a common axis, the seal having: an annular pack of stacked leaves mountable to said first component at root portions of the leaves distal to the second component and extending towards the second component such that end edges of the leaves are proximal to the second component; and a plurality of seal elements which cooperate to define an annulus extending around a surface of the second component; wherein each seal element: forms a sector of the annulus; is mounted to the leaf pack at the end edges of a respective group of said leaves; and defines a respective seal surface which is presented for interaction with said surface of the second component during relative rotation between the components, said seal surfaces cooperating such that, in use, a pressure drop is maintained axially across the leaf seal.

Preferably, said first component is provided around said second component and the annulus defined by the seal elements is provided between the two components so as to extend around the outside of said second component.

In preferred arrangements, said seal elements are of equal circumferential length.

Each said seal element is optionally removably connected to the leaf pack. Alternatively the seal elements may be permanently connected to the leaf pack.

The end edges of each said group of leaves may be embedded in a respective said seal element.

In preferred arrangements, each seal element has a maximum axial dimension which is greater than or equal to the axial width of the leaves.

Said seal surfaces of the seal elements are optionally radially stepped so as to have a first region and a second region separated by a step therebetween, the first region of the seal surface being radially spaced further from said surface of the second component than the second region of the seal surface.

Said pack has a high pressure side and a low pressure side across which said pressure drop is maintained in use, and said first regions of the respective seal surfaces are preferably proximal to the high pressure side, with said second regions of the respective seal surfaces being proximal to the low pressure side.

Each seal element can have hydrodynamic lift-generating features formed in its seal surface. In such arrangements, it is preferable for said hydrodynamic lift-generating features to be formed only in the second region of the seal surfaces.

Each seal element (52) may include at least one internal flow passage (57, 62) extending from an inlet port (61) in a surface of the seal element remote from the seal surface (53) to an outlet port (58) formed in a said hydrodynamic lift-generating feature (56).

Said seal elements may include respective removable plates defining at least the majority of the seal surface of each seal element.

In preferred arrangements, said seal elements cooperate to define said annulus such that gaps are defined between circumferentially adjacent seal elements.

Each said gap may be defined by opposing parallel end surfaces of a pair of circumferentially adjacent seal elements. Said opposing parallel end surfaces of the adjacent seal elements can extend radially relative to the common rotational axis of the two components. Alternatively, said opposing parallel end surfaces of the adjacent seal elements can make an acute angle to the radial direction relative to the common rotational axis of the two components.

Said gaps may be configured to present a tortuous leakage path to an axial flow. For example, the gaps may be axially stepped in some embodiments.

The seal surface of each seal element may have a profile comprising a planar region proximal and parallel to said surface of the second component, and at least one edge region extending from the planar region towards an edge of the seal element and away from said surface of the second component.

So that the invention may be more readily understood, and so that further features thereof may be appreciated, embodiments of the invention will now be described by way of example with reference to the accompanying drawings in which:
Figure 1 (discussed above) shows schematically a cut-away perspective view of a portion of a generally conventional leaf seal;
Figure 2 (discussed above) shows (a) a view along the axial direction of an arc segment of the pack of leaves of the seal of Figure 1, and (b) a plan view of a single leaf of the seal of Figure 1;
Figure 3 shows schematically a longitudinal section through a gas turbine engine;
Figure 4 shows a view along the axial direction of an arc segment of a leaf seal in accordance with an embodiment of the present invention;
Figure 5 is a radial cross-sectional view through the leaf seal of figure 5;
Figure 6 is a perspective view showing the relationship between two adjacent seal elements forming part of the leaf seal of figures 4 and 5;
Figure 7 is a schematic illustration showing part of the leaf seal, as viewed in a radially outward direction;
Figure 8 shows part of a leaf seal in accordance with another embodiment, in radial cross-section;
Figure 9 is a perspective view showing part of the arrangement shown in figure 8
Figure 10 is a view similar to that of figure 8, but which shows an alternative arrangement;
Figure 11 is another view similar to that of figures 8 and 10, but which shows another alternative arrangement;
Figure 12 is a perspective view showing part of the arrangement of figure 10;
Figure 13 is a view similar to that of figure 5, but which shows a leaf seal in accordance with another embodiment;
Figure 14 is a view similar to that of figure 7, but which shows the arrangement of figure 13;
Figure 15 is another view similar to that of figure 5, showing another embodiment;
Figure 16 is another view also similar to that of figure 5, showing a further embodiment;
Figure 17 shows part of an alternative leaf seal in radial cross-section;
Figure 18 is a view similar to that of figure 6, showing an alternative arrangement;
Figure 19 is another view similar to that of figure 6, showing a further alternative arrangement;
Figure 20 is a view similar to that of figure 4, but which shows the alternative arrangement illustrated in figure 19;
Figure 21 is a radial cross-sectional view through a leaf-seal in accordance with another embodiment;
Figure 22 is a radial cross-sectional view through a leaf-seal in accordance with an alternative embodiment;
Figure 23 is a radial cross-sectional view through a leaf-seal in accordance with a further embodiment;
Figure 24 is a radial cross-sectional view through another alternative embodiment of leaf-seal; and
Figure 25 is a radial cross-sectional view through yet another alternative embodiment of leaf-seal.

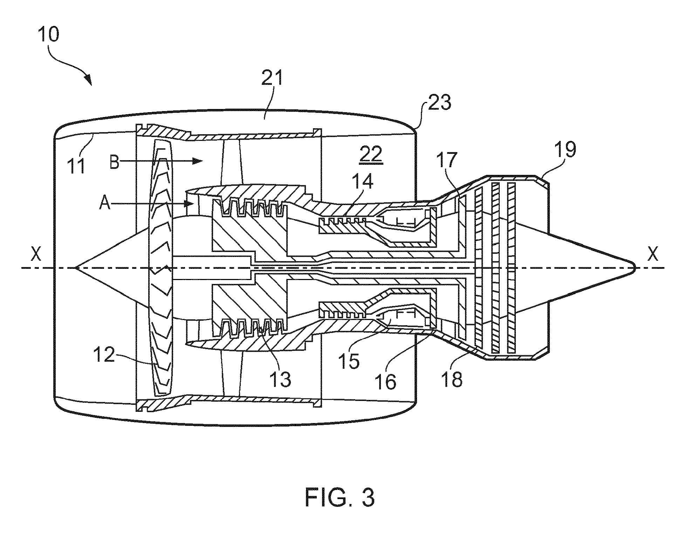

With reference to Figure 3, a ducted fan gas turbine engine incorporating the invention is generally indicated at 10 and has a principal and rotational axis X-X. The engine comprises, in axial flow series, an air intake 11, a propulsive fan 12, an intermediate pressure compressor 13, a high-pressure compressor 14, combustion equipment 15, a high-pressure turbine 16, and intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

During operation, air entering the intake 11 is accelerated by the fan 12 to produce two air flows: a first air flow A into the intermediate pressure compressor 13 and a second air flow B which passes through the bypass duct 22 to provide propulsive thrust. The intermediate pressure compressor 13 compresses the air flow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate pressure compressors 14, 13 and the fan 12 by suitable interconnecting shafts.

The engine has one or more leaf seals installed, for example, between an interconnecting shaft and a casing for the shaft.

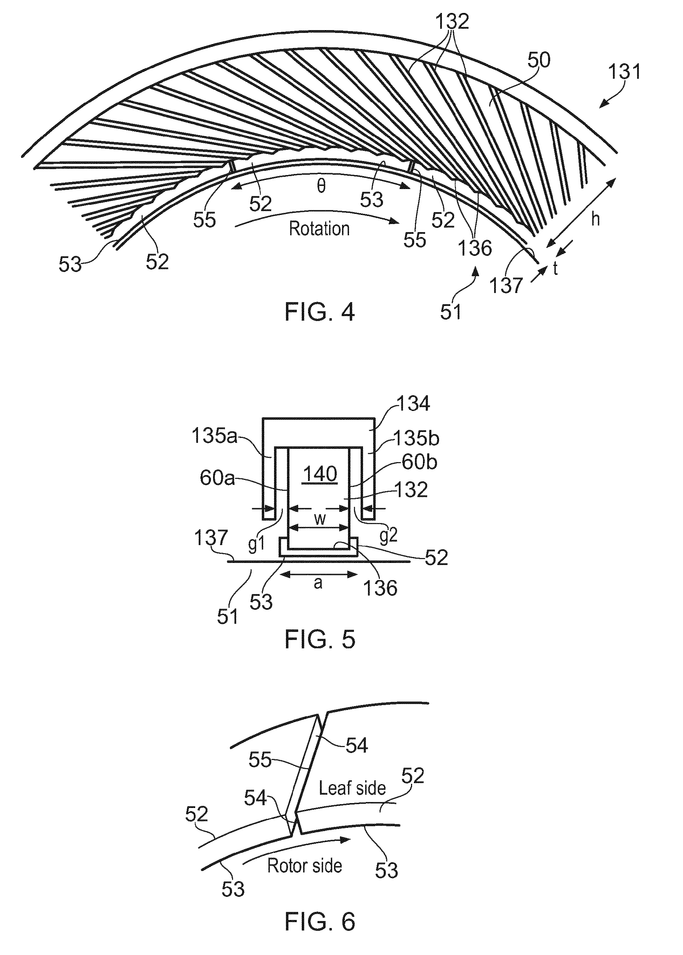

Figure 4 shows, schematically, an axial view of a sector of a pack 50 of individual leaves 132 used in a leaf seal 131 of the present invention. The pack of leaves 132 is preferably arranged and mounted relative to the surface 137 of a rotor 51 in a generally conventional manner, similar in several respects to the conventional arrangement illustrated in figures 1 and 2. Figure 5 shows a radial cross sectional view through the leaf seal 131.

The leaf seal 131 is thus shown to have an annular pack 50 of approximately rectangular leaves 132 terminating at radially inward end edges 136 which are proximal to the rotor 51. Although the end edges 136 of the leaves are proximal to the rotor 51. The leaves are held at an inclined angle to the radial. Interleaf gaps are formed between the leaves 132, giving a porous aerodynamic working section and sufficient compliance to adjust to the rotor. Nonetheless, the leaves are packed sufficiently tightly together so that the total leakage through the seal is low.

As illustrated most clearly in figure 5, the root portions 140 of the leaves, which are distal to the rotor 51, are held in a housing 134 which includes an upstream (high pressure) cover plate 135a and a downstream (low pressure) cover plate 135b which each cover a portion of the radial extent of the leaf pack in a generally conventional manner. Each leaf 132 has an upstream (high pressure) side edge 60a and a downstream (low pressure) side edge 60b.

The leaf seal 131 further comprises a plurality of arcuate seal elements 52 which, as illustrated most clearly in figure 1, are arranged in an end-to-end relationship such that they collectively define an annulus extending around the surface 137 of the rotor 51 between the rotor and the leaf pack 50, with each seal element 52 defining a sector of the annulus. Figure 4 shows only part of the resulting annulus and thus shows three seal elements 52, each defining an equal sized sector of the annulus, denoted by θ. The sector length θ, is of course dependent upon the number of seal elements 52 provided around the annulus, and will be determined according to requirements specific to each engine application.

Each seal element 52 defines a smooth and radially inwardly facing arcuate seal surface 53 which is presented for sealing interaction with the surface 137 of rotor 51 in a manner which will be described in more detail below. It is envisaged that when the rotor 51 is stationary and thus not rotating relative to the pack 50, or when the rotor is moving only at low speed relative to the pack 50, the seal surfaces 137 of the seal elements 52 leaves may lightly touch the surface 137 of the rotor 51 for wiping contact therewith during low-speed rotation.

The seal elements 52 are mounted to the leaf pack 50 at the end edges 136 of respective groups of leaves 132, and are thus accommodated within the radial space defined between the end edges 132 and the surface 137 of the rotor 51. In the particular arrangement illustrated, the seal elements 52 are fixedly connected to the end edges 136 of the leaves 132 by embedding the end edges 136 of the leaves 132 in the seal elements 52. The seal elements 52 are thus permanently connected to the leaf pack 50. However, it is to be appreciated that the seal elements 52 can be mounted to the end edges 136 of the leaves in other ways, and can also be removably connected to the end edges 136 in order to facilitate easy removal of the seal elements 52 from the leaf pack 50 for possible replacement during servicing.

The width w of each leaf 132 in the pack 50 is generally similar to the width of the leaves in conventional leaf seals, and is thus most likely to be in the range of 3 to 8 mm. Gaps g1 and g2, provided between the upstream and downstream side edges 60a, 60b of the leaves and the adjacent cover plates 135a, 135b, are used to control the lift-up/blow-down behaviour of the leaf pack under pressurization, as well as a means of leakage control. In the particular arrangement illustrated, as shown in figure 5, the seal elements 52 each have an axial width a which is slightly greater than the axial width w of the leaves 132, but which is less than the axial spacing (g1 + w + g2) between the two cover plates 135a, 135b. However, it is to be noted that the seal elements 52 could have an axial width a which is equal to the axial width w of the leaves 132. Other dimensional arrangements are also possible, as will be described in more detail hereinafter.

During relative rotation between the rotor 51 and the housing 134, and hence relative rotation between the rotor 51 and the seal elements 52, the seal surfaces 137 of the seal elements run in close proximity to the surface 137 of the rotor 51, or even in wiping contact therewith during low-speed rotation. The seal elements 52 thus cooperate to provide a seal at the surface 137 of the rotor such that a pressure drop is maintained axially across the leaf seal 131.

Because the seal elements 52 are mounted to the leaf pack 50 at the end edges 136 of respective groups of leaves 132, a degree of rigidity is introduced to the pack 50 at the end edges 136 of the leaves 132, which provides significant reduction in leaf vibration and leaf distortion, thereby making the seal 131 more robust to a range of different operating conditions.

Figure 6 shows in more detail the end-to-end relationship between adjacent seal elements 52, and shows an arrangement in which the seal elements 52 each have generally planar end surfaces 54 which extend radially with respect to the rotational axis of the rotor 51. The end surfaces 54 of each pair of adjacent seal elements 52 are thus parallel, and are also circumferentially spaced apart by a small distance to define a gap 55 between the seal elements 52. As shown in figure 4, a plurality of such gaps 55 are defined between adjacent seal elements around the annulus. The size and number of gaps 55 provided around the annulus can be varied according to particular flow leakage and compliance requirements, but it will be appreciated that the gaps 55 are generally kept small to minimize leakage therethrough. Other gap configurations are possible, as will be explained in more detail hereinbelow. The size and configuration of the gaps 55 are carefully selected to balance leakage through the gaps with the likelihood of adjacent seal elements 52 coming into contact with one another during use, and the associated hysteresis effect.

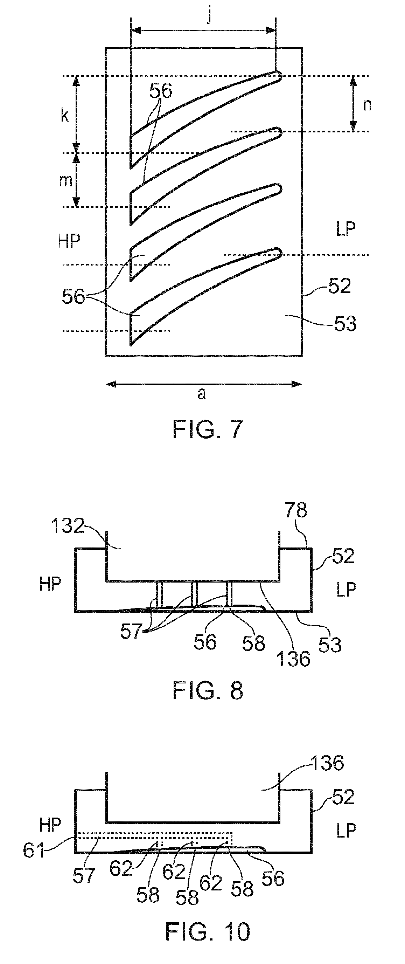

In order to improve the air-riding function of the seal elements 52 relative to the surface 137 of the rotor 51, the seal elements 52 can be provided with hydrodynamic lift-generating features in their seal surfaces 53, such as the lift-generating grooves 56 illustrated in figure 7. The grooves 56 are machined into the seal surface 53 of each seal element 52. Alternatively, in some arrangements it is envisaged that only some of the seal elements 52 may be provided with lift-generating features.

The grooves 56 are configured to generate lift from the leakage flow of air between the seal surfaces 53 and the surface 137 of the rotor 51, thereby providing an improved air-riding effect between the seal elements 52 and the rotor 51. The exact configuration of the grooves 56 and their relationship to one another can be configured to the particular operating parameters of any given installation. For example, the pitch (denoted by m, n in figure 7) of the grooves 56 can be varied, as indeed can the dimensions (denoted by j, k in figure 7) of the grooves 56 to ensure groove configurations are appropriate for specific engine applications. The depth and/or the shape of the grooves may also be configured to particular requirements for the air-riding effect required.

It is to be appreciated, however, that the lift-generating grooves 56 can be susceptible to blockage from the gradual deposition of particulates during extended use, which can reduce the lift-generating effect of the grooves 56. This can be reduced by providing a number of different configurations of flow passages in order to feed a flow of cleaning air, drawn from the working fluid within the engine, to the grooves 56. Such a cleaning flow of air can also serve to help cool the seal elements 52 in the event that they make contact with the rotor 51 during use which would generate heat through friction, and also to enhance the pressure increase between the sealing elements and the rotor, thereby improving hydrostatic/hydrodynamic lift and thus the air-riding performance of the leaf seal.

Figure 8 illustrates a simple configuration of such flow passages, and shows a plurality of parallel flow passages 57 formed through the seal element 52 so as to extend from respective inlet ports (not shown) formed in the radially outermost surface 78 of the seal element, at positions between the leaves 132, to the grooves 56 where the flow passages 57 open into the grooves via respective outlet ports 58. It is proposed that each groove 56 may be provided with flow passages 57 in this manner, although it is possible for only some of the grooves 56 to have flow passages 57. It is also to be noted that whilst the flow passages 57 in the illustrated embodiment are parallel, this is not essential and in variants the flow passages could be arranged in a non-parallel manner in order to vary the angle of entry of each jet of air into the groove 56.

Figure 10 illustrates an alternative flow passage arrangement, in which the groove 56 is fed with a flow of cleaning/cooling air from the high pressure side face of the seal element rather than from the radially outermost surface. A single primary flow passage 57 extends from an inlet port 61 in the side face to a plurality of primary flow passages 62, each of which opens into the groove 56 via respective outlet ports 58.

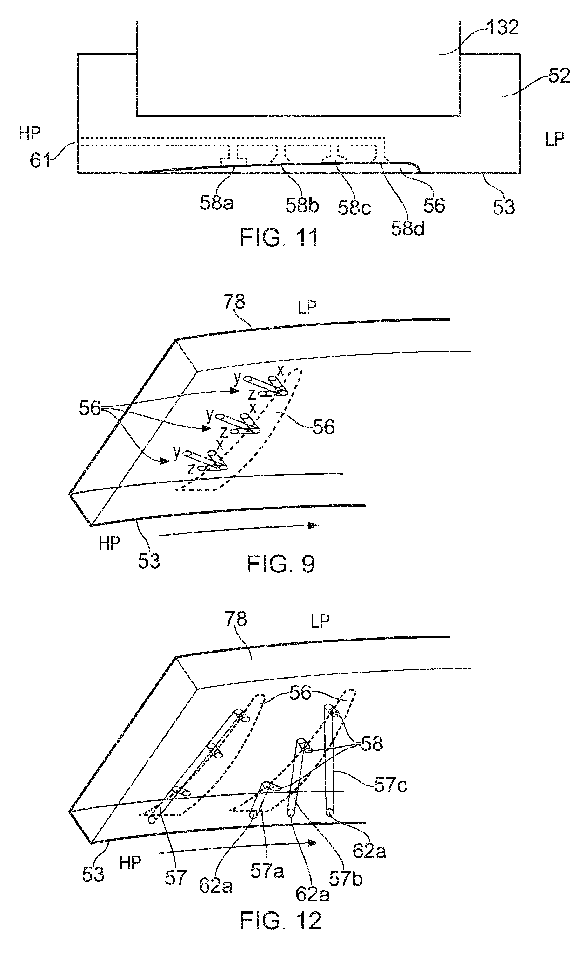

The size and geometry of the outlet ports 58 in both of the arrangements illustrated in figures 8 and 9 can be varied depending on particular requirements such as ejection velocity of the cleaning/cooling airflow into the grooves 56. Examples 58a, 58b, 58c and 58d are shown in figure 11, and a combination of such different geometries can be used in each seal element and/or for each groove 56.

It is also to be noted that in the case that the grooves 56 are fed with a flow of cleaning/cooling air drawn from the radially outermost side of the seal elements, as illustrated in figure 8, the orientation of the flow passages 57 can be varied also. The flow passages 57 can be radially aligned as shown in figure 8, and noted by x in figure 9. Alternatively, the flow passages 57 can be canted at an angle in the axial plane as denoted by y, or canted at an angle in a radial plane as denoted by z. Combinations of these orientations can be used for each groove 56.

In the case that the grooves 56 are fed with a flow of cleaning/cooling air drawn from the high pressure side face of the seal element, in the manner illustrated in figure 10, then each flow outlet 58 can be fed with a flow drawn from a respective inlet 62a, 62b, 62c in the side face and along a respective primary flow passage 57a, 57b, 57c as illustrated in figure 12. A single seal element 52 can even include both the single inlet/passage configuration of figure 10 for one or more of its grooves 56 and a multiple inlet/passage configuration for others, as illustrated in figure 12.

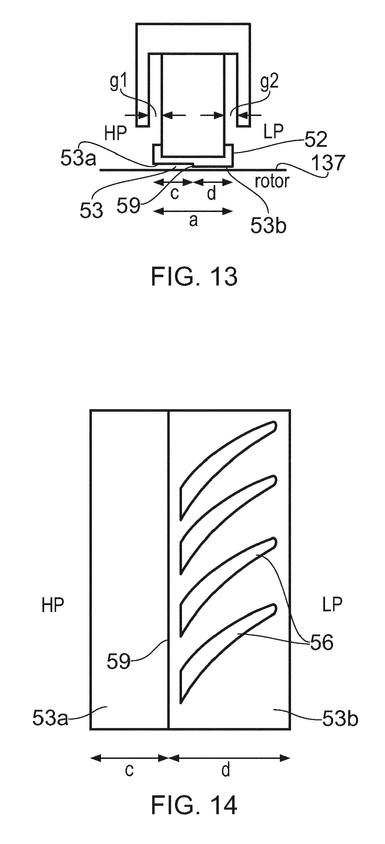

The invention has been described above with reference to embodiments in which the seal surfaces 53 of the seal elements are continuous and uninterrupted except for the possible provision of the lift-generating grooves 56. However, other arrangements are also possible, such as the example illustrated in figure 13, which is a similar view to that of figure 5.

In the arrangement of figure 13, the seal surface 53 of the seal element 52 is radially stepped so as to have a first region 53a on the high pressure/upstream side of the seal element, and a second region 53b on the low pressure/downstream side of the seal element. The two regions 53a, 53b of the seal surface are thus separated by a small radially extending step 59. It will be noted that the first region 53a is radially spaced further from the surface 137 of the rotor 51 than the second region 53b. This stepped seal surface configuration enhances hydrostatic lift of the seal element 52 radially away from the rotor 51 during rotation of the rotor, under the effect of an axial pressure differential across the interface between the rotor surface 137 and the seal surface 53.

The stepped configuration illustrated in figure 13 can also be provided with hydrodynamic lift-generating features, as shown in figure 14. It will be noted, however, that in this arrangement the lift-generating grooves 56 are provided only in the second region 53b of the seal surface, i.e. the region on the low pressure/downstream side of the step 59, which of course is the region in closest proximity to the rotor surface 137.

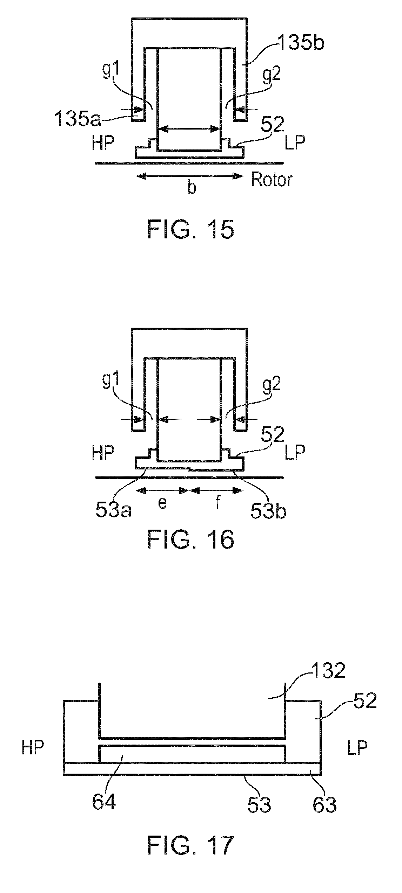

Figure 15 illustrates another arrangement in which the seal elements 52 have a larger axial width, denoted by b, than in the arrangement illustrated in figure 5. More particularly, it will be noted that the seal elements 52 in this arrangement have an axial width b such they extend axially past both the upstream cover plate 135a and the downstream cover plate 135b. In other words, the axial width b is greater than the sum of the upstream gap g1 between the upstream cover plate 135 and the upstream side edge 60a of the leaves, the axial width of the leaves 132, and the downstream gap g2 between the downstream cover plate 135b and the downstream side edge 60b of the leaves.

The arrangement of figure 15 thus provides an enlarged area of seal surface 53, which in turn enables a seal designer more design freedom in the case that more hydrodynamic lift should be required. The enlarged arrangement can also be provided with radially stepped seal surfaces 53, as illustrated in figure 16, similar to those of the previously described arrangements, and can also include lift-generating features such as grooves in the seal surface 137, whether or not it is stepped.

Figure 17 illustrates another modified configuration of seal element 52 in which the seal surface 53 is defined by a plate 63 which is removably mounted to the main body of the seal element 52. An internal void or cavity 64 may be provided behind the plate 63, as shown, which permits reduction (and control by varying the size of the cavity) of the mass of the complete seal element 52. Because the plate 63 is removable it can be easily replaced during servicing by permitting a new seal surface 53 to be applied without necessitating removal of the entire seal element 52 from the leaves 132. The plate 63 may be provided with a stepped seal surface and/or lift-generating features in the same general manner as explained above.

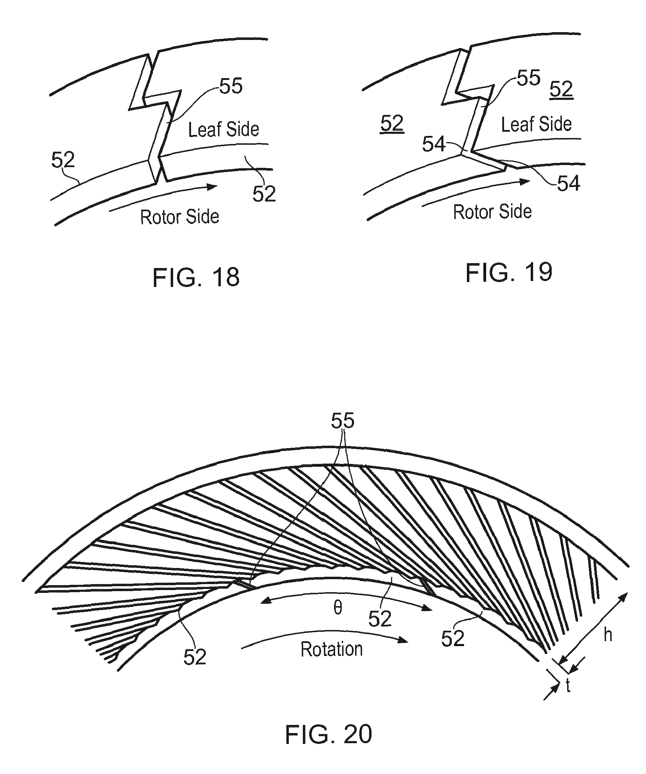

Turning now to consider figure 18, an alternative arrangement of the gap 55 between a pair of circumferentially adjacent seal elements 52 is shown. In this arrangement, the gap 55 is axially stepped so as to present a tortuous path for the leakage flow of air between the two seal elements 52. This is achieved by providing the seal elements with complimentary stepped end surfaces as shown. In the stepped gap arrangement illustrated, only one step is provided, although it is to be appreciated that more than one step can be provided to increase the tortuosity of the gap presented to leakage flow.

Figures 19 and 20 show a further modification to the configurations of the gaps 55 between adjacent seal elements 52. In the arrangement shown in these drawings the gaps 55 are defined between opposing end surfaces 54 of adjacent seal elements 52 which are inclined at an acute angle to the radial direction relative to the rotational axis of the rotor. The gaps 55 are thus similarly inclined to the radial direction, as illustrated most clearly in figure 20. This orientation can also be adopted for non-stepped gaps 55.

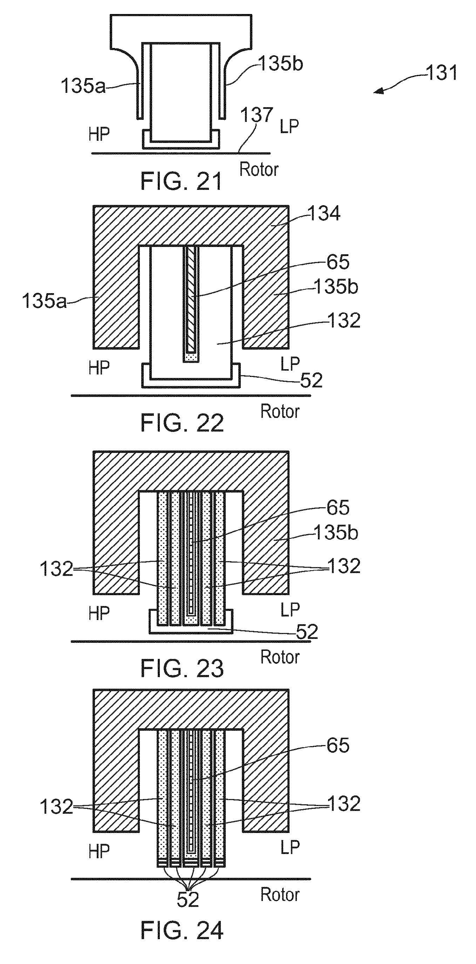

Figure 21 illustrates a seal arrangement 131 in which the two cover plates 135a, 135b are flexible. This additional feature may help achieve a more predictable degree of leaf "blow-down" against the surface 137 of the rotor 51.

The leaf seal of the present invention can also be embodied in an arrangement such as that shown in figure 22, in which a flow-blocking barrier 65 is provided inside the leaf-pack 50, in a manner known *per se.* The barrier 65 extends radially inwardly from the housing 134 towards the rotor 51 and serves to further block the axial flow of leakage air through the leaf pack 50, between the individual leaves 132.

Figure 23 shows the invention embodied in a seal arrangement comprising multiple rows of leaves 132 arranged axially adjacent one another, as well as a flow-blocking barrier 65 similar to that shown in figure 22. In the arrangement of figure 23, each sealing element 52 is mounted to the leaf pack 50 across all of the adjacent rows of leaves 132. Alternatively, a plurality of axially arranged seal elements 52 can be provided, such as is shown in the arrangement of figure 24, such that each row of leaves 132 is provided with its own series of seal elements 52 cooperating to define respective annuluses around the rotor 51. In such an arrangement, it is envisaged that the seal elements 52 of axially adjacent annuluses will be circumferentially offset such that their gaps 55 are not in axial alignment, thereby further reducing leakage flow across the seal via the gaps 55.

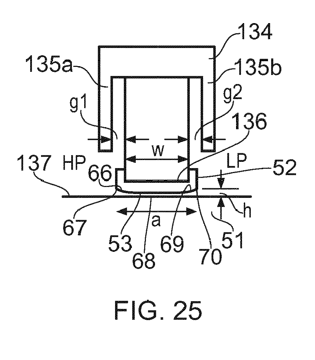

Figure 25 shows another embodiment of the invention which, in the form shown, can be considered to represent a modification of the arrangement shown in figure 5. In this arrangement the seal surface 53 of the seal element 52 which is presented to the surface 137 of the rotor has a profile which is not planar over its entire axial extent. In particular, it will be noted that the upstream region 66 of the seal surface 53 is chamfered where it meets the upstream side face of the seal element 52. This chamfered profile at the upstream edge of the seal element 52 defines a small inlet space 67 between the upstream region of the seal surface 53 and the surface 137 of the rotor 51. The inlet space 67 is thus tapered such that it narrows from a maximum radial dimension h at the upstream edge of the seal element 52 down to a minimum radial dimension at a downstream position where it blends into a central planar region 68 of the seal surface 53 which is parallel to the surface 137 of the rotor 51.

The inlet space 67 serves to admit a flow of air between the seal surface 53 and the surface 137 of the rotor to assist in the generation of hydrostatic lift between the seal element 52 and the rotor 51.

In the particular arrangement illustrated in figure 25, the downstream region 69 of the seal surface is profiled in an identical manner such that another space 70 is defined between the downstream region of the seal surface 53 and the surface 137 of the rotor 51. The downstream space 70 may function as a similar inlet in the event that the pressure differential across the leaf seal is reversed, as may be anticipated during cyclic performance of a gas turbine engine or other turbo-machine.

Whilst the inlet space 67, and the downstream space 70 are shown in figure 25 as being defined by respective curved chamfers at the upstream and downstream regions 66, 69 of the seal surface 53, it should be appreciated that in alternative embodiments the spaces 67, 70 may have a linearly tapering profile. Alternatively, the spaces 67, 70 could be defined by a stepped profile at the upstream and downstream regions of the seal surface 53.

It will be noted that despite the chamfers provided at the upstream and downstream edges of the seal element 52 illustrated in figure 25, there still remains a sufficient area of the seal surface 53 therebetween to permit the formation of hydrodynamic features in the seal surface, such as the grooves 56 described above in connection with the other embodiments.

As will be understood, the invention effectively introduces additional features into the conventional leaf seal design which enable closer running clearances, reduced leaf vibrations and distortions, and reduced rotor-contact during engine operation. This is to achieve a low leakage, long life seal. The invention provides a simple and cost-effective means of enhancing the current technology to ensure its durability in service, particularly in the more arduous engine locations where engine overhaul and repair is significantly more costly. The option for seal element (or plate) replacement in the case of some deterioration strengthens the business case for this technology. The presence of seal elements 52 in the tip-region of the leaf pack 50 improves the dynamic properties of the seal by reducing leaf flutter and leaf distortion. The use of segmented seal elements 52 maintains radial compliance with the rotor 51 around its circumference. Air-riding features on the rotor-side of the seal elements 52 ensure minimal rotor-contact at all operating conditions in the engine cycle. This invention can exploit both hydrostatic and hydrodynamic lift mechanisms to achieve this.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

## Claims

1. A leaf seal (131) for effecting a seal between first (134) and second (51) coaxial components arranged for relative rotation about a common axis, the seal having: an annular pack (50) of stacked leaves (132) mountable to said first component (134) at root portions (140) of the leaves distal to the second component (51) and extending towards the second component (51) such that end edges(136) of the leaves (132) are proximal to the second component (51); and a plurality of seal elements (52) which cooperate to define an annulus extending around a surface (137) of the second component (51); wherein each seal element (52): forms a sector of the annulus; is mounted to the leaf pack (50) at the end edges (136) of a respective group of said leaves (132); and defines a respective seal surface (53) which is presented for interaction with said surface (137) of the second component (51) during relative rotation between the components, said seal surfaces (53) cooperating such that, in use, a pressure drop is maintained axially across the leaf seal (131).

2. A leaf seal according to claim 1, wherein said first component (134) is provided around said second component (51) and the annulus defined by the seal elements (52) is provided between the two components so as to extend around the outside of said second component (51).

3. A leaf seal according to claim 1 or claim 2, wherein each said seal element (52) is removably connected to the leaf pack (50).

4. A leaf seal according to any preceding claim, wherein the end edges (136) of each said group of leaves (132) are embedded in a respective said seal element (52).

5. A leaf seal according to any preceding claim, wherein each seal element (52) has a maximum axial dimension (a) which is greater than or equal to the axial width (w) of the leaves (132).

6. A leaf seal according to any preceding claim, wherein said seal surfaces (53) of the seal elements (52) are radially stepped so as to have a first region (53a) and a second region (53b) separated by a step (59) therebetween, the first region (53a) of the seal surface being radially spaced further from said surface (137) of the second component (51) than the second region (53b) of the seal surface.

7. A leaf seal according to claim 6, wherein said pack (50) has a high pressure side and a low pressure side across which said pressure drop is maintained in use, said first regions (53a) of the respective seal surfaces (53) being proximal to the high pressure side, and said second regions (53b) of the respective seal surfaces (53) being proximal to the low pressure side.

8. A leaf seal according to any preceding claim, wherein each seal element (52) has hydrodynamic lift-generating features (56) formed in its seal surface (53).

9. A leaf seal according to claim 8, dependent upon claim 6 or claim 7, wherein said hydrodynamic lift-generating features (56) are formed only in the second region (53b) of the seal surfaces.

10. A leaf seal according to claim 8 or claim 9, wherein each seal element (52) includes at least one internal flow passage (57, 62) extending from an inlet port (61) in a surface of the seal element remote from the seal surface (53) to an outlet port (58) formed in a said hydrodynamic lift-generating feature (56).

11. A leaf seal according to any preceding claim, wherein said seal elements (52) include respective removable plates (63) defining at least the majority of the seal surface (53) of each seal element (52).

12. A leaf seal according to any preceding claim, wherein said seal elements (52) cooperate to define said annulus such that gaps (55) are defined between circumferentially adjacent seal elements (52).

13. A leaf seal according to claim 12, wherein each said gap (55) is defined by opposing parallel end surfaces (54) of a pair of circumferentially adjacent seal elements (52).

14. A leaf seal according to claim 13, wherein said opposing parallel end surfaces (54) of the adjacent seal elements (52) extend radially relative to the common rotational axis of the two components (134, 51).

15. A leaf seal according to claim 13, wherein said opposing parallel end surfaces (54) of the adjacent seal elements make an acute angle to the radial direction relative to the common rotational axis of the two components (134, 51).
